# EUROPÄISCHE PATENTANMELDUNG

(11) **EP 2 323 085 A1**
(43) Veröffentlichungstag der Anmeldung: **18.05.2011**
(21) Anmeldenummer: 09014273.8
(22) Anmeldetag: 16.11.2009
(51) Int. Cl.: G06Q 10/00

(54) **Ticketingsystem**

(71) Anmelder: Scheidt & Bachmann GmbH, 41238 Mönchengladbach (DE)
(72) Erfinder: Miller, Norbert, Dr., 41063 Mönchengladbach (DE); Augustyniak, Matthias, 41844 Wegberg (DE)
(74) Vertreter: Stenger, Watzke & Ring

(57) **Zusammenfassung**

Um den Anwendungsbereich eines auf Basis von virtuellen Tickets arbeitenden Ticketingsystems zu erweitern, wird mit der Erfindung vorgeschlagen ein Verfahren zum Betrieb eines Ticketingsystems, bei dem
- ein virtuelles Ticket (5) erzeugt wird,
- dem virtuellen Ticket (5) ein benutzerunabhängiger Zugriffscode (6) zugeordnet wird,
- das virtuelle Ticket (5) zusammen mit dem Zugriffscode (6) gespeichert wird,
- der Zugriffscode (6) auf einen separaten Datenspeicher (8) hinterlegt wird

und bei dem ein Zugriff auf das virtuelle Ticket (5) durch Eingabe des auf dem separaten Datenspeicher (8) hinterlegten Zugriffscode (6) an einer dafür vorgesehenen Eingabestelle (9) des Ticketingsystems (1) erfolgt.

## Beschreibung

Die Erfindung betrifft ein Verfahren zum Betrieb eines Ticketingsystems.

Ticketingsysteme, auch Zahlkartensysteme genannt, sind aus dem Stand der Technik an sich bekannt, ebenso wie Verfahren zu deren Betrieb.

Es finden derzeit insbesondere solche Ticketingsysteme Verwendung, die auf der Basis von real existierenden Tickets, wie zum Beispiel Magnetkarten oder dergleichen arbeiten. Es sind aber auch schon solche Ticketingsysteme bekannt geworden, die auf Basis von virtuellen Tickets arbeiten. Gemäß solcher Systeme wird ein Ticket nicht mehr durch ein von einem Benutzer mit sich zu tragendes Medium gebildet. Das Ticket liegt vielmehr als virtuelles Ticket in Form eines Datensatzes vor, der in einem Speicher des Ticketingsystems, dem sogenannten Back Office hinterlegt wird. Dabei erfolgt die Zuordnung des virtuellen Tickets zum Benutzer über personenbezogene Daten des Benutzers, die zusammen mit dem virtuellen Ticket im Back Office des Ticketingsystems gespeichert sind. Der Zugriff auf das virtuelle Ticket erfolgt in der Form, dass die personenbezogenen Daten als Suchkriterium und Schlüssel benutzt werden.

Ticketingsysteme mit virtuellen Tickets werden derzeit insbesondere von Fluggesellschaften für die Flugzeugzugangskontrolle, das sogenannte Boarding verwendet.

Die vorbekannten Ticketingsysteme, die auf Basis von virtuellen Tickets arbeiten, sind in nachteiliger Weise nicht für anonyme Benutzer geeignet. Der Zugriff auf das virtuelle Ticket erfolgt über die dem Ticketingsystem bekannten personenbezogenen Daten, was eine Anonymisierung ausschließt. Der Einsatz vorbekannter Ticketingsysteme ist damit auf nur sehr spezielle Anwendungsbereiche begrenzt.

Die **Aufgabe** der Erfindung ist es, den Anwendungsbereich von auf Basis von virtuellen Tickets arbeitenden Ticketingsystemen zu erweitern.

Zur **Lösung** dieser Aufgabe wird mit der Erfindung vorgeschlagen ein Verfahren zum Betrieb eines Ticketingsystems, bei dem
- ein virtuelles Ticket erzeugt wird,
- dem virtuellen Ticket ein benutzerunabhängiger Zugriffscode zugeordnet wird,
- das virtuelle Ticket zusammen mit dem Zugriffscode gespeichert wird,
- der Zugriffscode auf einem separaten Datenspeicher des Benutzers hinterlegt wird
und bei dem ein Zugriff auf das virtuelle Ticket durch Eingabe des auf dem separaten Datenspeicher hinterlegten Zugriffscode an eine dafür vorgesehenen Eingabestelle des Ticketingsystems erfolgt.

Das erfindungsgemäße Verfahren erlaubt in vorteilhafter Weise den Betrieb eines auf Basis von virtuellen Tickets arbeitenden Ticketingsystems auch für anonyme Benutzer. Die Verwendung, das heißt Nutzung von personenbezogenen Daten ist im Unterschied zu den aus dem Stand der Technik vorbekannten Systemen nicht erforderlich. Das erfindungsgemäße Verfahren ist damit auch in solchen Bereichen einsetzbar, die anders als beispielsweise die Flugzeugzugangskontrolle die Erfassung von personenbezogenen Daten nicht vorsehen. Zu nennen sind hier beispielsweise Tickets für den öffentlichen Personennahverkehr in Form beispielsweise von Tages- oder Monatsfahrausweisen.

Der erfindungsgemäße Betrieb geht wie folgt von statten. Ein Benutzer erwirbt ein Ticket in Form eines virtuellen Tickets, das heißt in Form eines Datensatzes. Dieser Datensatz enthält sämtliche Ticketinformationen, was im Falle beispielsweise eines Fahrausweises für den öffentlichen Personennahverkehr die Fahrpreiszone, die Uhrzeit, die Gültigkeitsdauer, etwaige Benutzungsbeschränkungen und/oder dergleichen umfassen kann. Dem erzeugten virtuellen Ticket wird ein Zugriffscode zugeordnet, und zwar ein benutzerunabhängiger Zugriffscode. Dies kann beispielsweise eine einfache Zahlen- und/oder Buchstabenfolge sein.

Der Zugriffscode wird zusammen mit dem virtuellen Ticket im Back Office des Ticketingsystems gespeichert. Da es sich bei dem Zugriffscode um einen eineindeutigen Code handelt, kann über diesen auch eine eineindeutige Identifizierung des zugeordneten virtuellen Tickets erfolgen.

Der Zugriffscode wird ferner auf einem separaten Datenspeicher des Benutzers hinterlegt. Bei dem Datenspeicher kann es sich beispielsweise um eine Speicherkarte, beispielsweise in Form einer Smartcard, einer Chipkarte oder dergleichen, aber auch um andere Speichermedien, wie zum Beispiel ein Mobiltelefon, eine mobile Rechnereinheit oder dergleichen handeln. Bei dem Speicher kann es sich aber auch um einen einfachen Ausdruck des Zugriffscodes auf Papier handeln.

Um nun Zugriff auf das virtuelle Ticket bekommen zu können, ist der Zugriffscode an einer dafür vorgesehenen Eingabestelle des Ticketingsystems einzugeben. Dies kann entweder manuell oder auch automatisch dadurch erfolgen, dass die Eingangsstelle den auf den separaten Datenspeicher hinterlegten Zugriffscode beispielsweise funktechnisch ausliest. Der über die Eingangsstelle dem Ticketingsystem mitgeteilte Zugriffscode wird nun systemseitig zur eineindeutigen Identifizierung des vorher benutzerseitig erworbenen virtuellen Tickets genutzt. Der zugehörige Datensatz wird systemseitig ausgelesen und führt an der Eingabestelle des Zugriffscodes zur Erzeugung eines entsprechenden Ausgangssignals, was beispielsweise eine Freischaltung bewirkt, einen Zugang ermöglicht und/oder eine dergleichen Validierungs- und/oder Zugangskontrolle abschließt.

Der Vorteil der erfindungsgemäßen Verfahrensdurchführung ist darin zu sehen, dass sie unter Verwendung eines eineindeutigen Zugriffscodes personenunabhängig durchgeführt wird. Dabei kann der Zugriffscode gemäß einer alternativen Ausgestaltungsform der Erfindung auch personenbezogene Daten beinhalten, wie zum Beispiel den elektronischen Fingerabdruck, um gegebenenfalls besonders sicherheitsrelevanten Aspekten Rechnung tragen zu können. Das erfindungsgemäße Verfahren erlaubt aber im Unterschied zum Stand der Technik einen grundsätzlichen Ticketingsystembetrieb ohne personenbezogene Daten, so dass auch eine anonymisierte Nutzung, das heißt eine Verwendung auch durch anonyme Benutzer möglich ist.

Gemäß einem weiteren Merkmal der Erfindung ist vorgesehen, dass dem virtuellen Ticket der Zugriffscode bei der Erzeugung des virtuellen Tickets zugeordnet wird. Dabei kann als Zeitpunkt der Erzeugung des virtuellen Tickets der Zeitpunkt des Verkaufs an den Benutzer gewählt werden. Alternativ ist es auch möglich, als Zeitpunkt den Zeitpunkt zu wählen, zu dem das Ticket produziert, gegebenenfalls vorproduziert wird. Dies kann insbesondere Tickets wie Tages- oder Monatsfahrausweise für den öffentlichen Nahverkehr betreffen, die in Form von Smartcards über systemferne Verkaufsstellen wie zum Beispiel Kioske und Zeitschriftenläden vertrieben werden. Erfindungswesentlich ist allein, dass ein erzeugtes virtuelles Ticket bei seiner späteren Verwendung eineindeutig über den dem Ticket zugeordneten Zugriffscode identifizierbar ist.

Gemäß einem weiteren Merkmal der Erfindung ist vorgesehen, dass das virtuelle Ticket zusammen mit dem Zugriffscode zentral gespeichert wird. Es können gegebenenfalls auch mehrere Zentralstellen vorgesehen sein. Von Bedeutung ist allein, dass das virtuelle Ticket und der das virtuelle Ticket eineindeutig identifizierende Zugriffscode abrufbar gespeichert sind, und zwar bevorzugterweise ohne Manipulationszugriffsmöglichkeit durch den Benutzer.

Als vom Benutzer mitzuführende separate Datenspeicher kommen grundsätzlich alle Datenspeicher in Frage, die der Speicherung eines Zugriffscodes nach der Erfindung dienen können. In erster Linie sind hierunter gängige Datenspeicher zu verstehen, die vom Benutzer auf einfache Weise und leicht mitgeführt werden können. Dies können Chipkarten, Magnetstreifenkarten, Smartcards und/oder dergleichen sein. Auch andere Speichermedien, wie zum Beispiel Mobiltelefone, Laptops, Notebooks, iPods und/oder dergleichen eignen sich hierfür natürlich ebenfalls. Hinsichtlich des Datenspeichers kann dabei grundsätzlich unterschieden werden zwischen solchen, die der Benutzer ohnehin schon in seinem Besitz hat und solchen, die der Benutzer neu erwirbt. Handelt es sich bei dem Datenspeicher um einen solchen, der bereits im Besitz des Benutzers befindlich ist, so wird der Zugriffscode auf diesen Datenspeicher übertragen. Dies kann beispielsweise mittels herkömmlicher Schnittstellen, wie zum Beispiel Bluetooth erfolgen. Alternativ ist auch die Verwendung von Datenspeichern möglich, die der Benutzer beim Kauf des virtuellen Tickets erwirbt und mit dem Zugriff auf das virtuelle Ticket an der dafür vorgesehenen Eingabestelle des Ticketingsystems wieder abgibt. Es können in diesem Zusammenhang sowohl Einwegspeicher als auch wiederverwendbare Datenspeicher zum Einsatz kommen.

Alternativ kann der Zugriffscode auch durch den Nutzer selber zur Verfügung gestellt werden, indem der Zugriffscode von einem Medium bzw. Ausweis des Nutzers ausgelesen wird. Das Auslesen kann in elektronischer oder optischer Form erfolgen. Der ausgelesene Zugriffscode wird zusammen mit dem virtuellen Ticket gespeichert und dient der Wiedererkennung des Nutzers im System. Dies kann dazu genutzt werden, um zum Beispiel Ausweise, die keinen elektronischen Speicher enthalten oder bei denen der Inhalt des elektronischen Speichers nur gelesen werden kann/darf, im System nutzbar zu machen. Unter die Gruppe der Medien ohne elektronischen Speicher fallen zum Beispiel Personalausweise oder Führerscheine und in die Gruppe der Medien, deren Speicher nur gelesen werden kann/darf, fallen zum Beispiel Reisepässe, Kreditkarten mit RFID-Technologie, Smartcards fremder Anbieter etc.

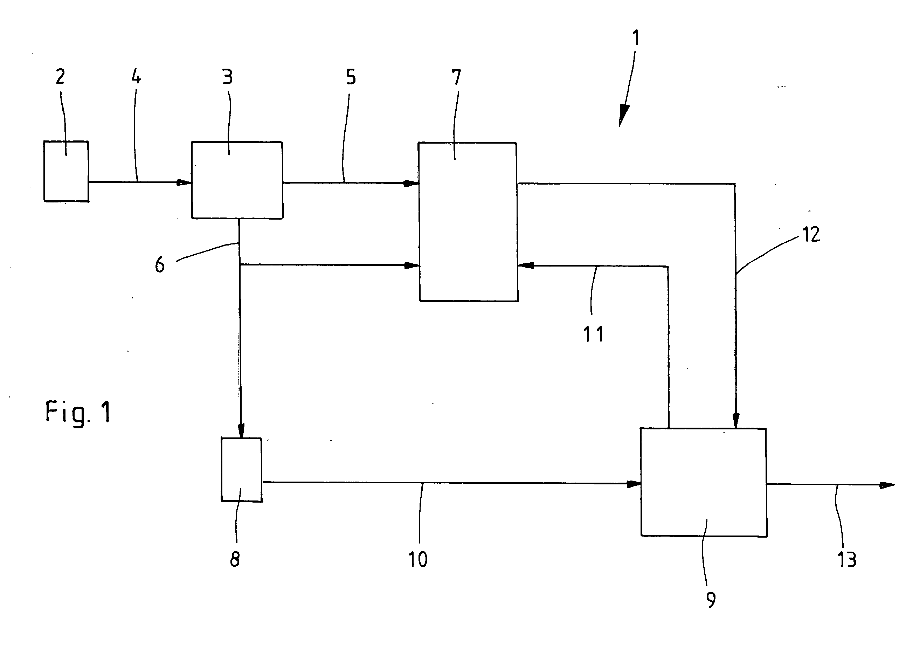

Weitere Merkmale und Vorteile der Erfindung ergeben sich anhand der nachfolgenden Beschreibung anhand der einzigen Fig. 1, die in schematischer Darstellung das erfindungsgemäße Verfahren zeigt.

In Fig. 1 ist das erfindungsgemäße Verfahren zum Betrieb eines Ticketingsystems 1 schematisch dargestellt. Ein Benutzer 2 erwirbt bei einer Verkaufsstelle 3 ein elektronisches Ticket 5. Die Kaufanforderung ist in der Darstellung nach Fig. 1 durch den Pfeil 4 symbolisiert.

Das elektronische Ticket 5 wird in einem zentralen Speicher 7 des Ticketingsystems 1, dem sogenannten Back Office hinterlegt.

Mit der Erzeugung des virtuellen Tickets 5 wird ein Zugriffscode 6 generiert, der personenunabhängig ist. Dieser Zugriffscode 6 wird ebenfalls im Speicher 7 des Ticketingsystems 1 hinterlegt, wobei über den Zugriffscode 6 eine eineindeutige Identifizierung des dem Zugriffscode 6 zugeordneten virtuellen Tickets 5 möglich ist.

Der Zugriffscode 6 wird ferner in einem separaten und vom Benutzer 2 mitzuführenden Speicher 8 gespeichert. Soll das virtuelle Ticket 5 nun aktiviert, das heißt benutzerseitig auf das virtuelle Ticket 5 zugegriffen werden, so hat an der zugehörigen Eingabestelle des Ticketingsystems 1, beispielsweise einer Validierungs- und/oder Kontrollstelle 9 eine Eingabe 10 des Zugriffscodes 6 zu erfolgen. Handelt es sich bei dem separaten Datenspeicher 8 um einen elektronischen Speicher, so kann die Eingabe 10 auf elektronischem Wege auch automatisiert durchgeführt werden. Im denkbar einfachsten Fall kann es sich bei dem Datenspeicher 8 auch um ein mit dem Zifferncode bedrucktes Papier handeln. In diesem Fall kann die Eingabe 10 manuell über ein Tastenfeld der Validierungs- und/oder Kontrollstelle 9 erfolgen.

Nach Eingabe des Zugriffscodes 6 leitet die Validierungs- und/oder Kontrollstelle den Zugriffscode 6 an den Speicher 7 des Ticketingsystems 1 weiter. Die Weitergabe des Zugriffscodes 6 an den Speicher 7 ist in der Darstellung nach Fig. 1 durch das Bezugszeichen 11 symbolisiert.

Über den an den Speicher 7 des Ticketingsystems 1 geleiteten Zugriffscode 6 erfolgt eine eineindeutige Identifizierung des zugehörigen virtuellen Tickets 5, welches alsdann in Entsprechung des Pfeils 12 an die Validierungs- oder Kontrollstelle 9 übermittelt wird. Das in Form eines Datensatzes vorliegende virtuelle Ticket 5 löst sodann bei der Validierungs- oder Kontrollstelle 9 ein Ausgangssignal 13 aus, das beispielsweise zu einer Zugangsfreigabe und/oder dergleichen führt.

### Bezugszeichenliste

- 1: Ticketingsystem
- 2: Benutzer
- 3: Verkaufsstelle
- 4: Anforderung
- 5: virtuelles Ticket
- 6: Zugangskontrolle
- 7: Speicher des Ticketingsystems
- 8: separater Speicher
- 9: Validierungs- und/oder Kontrollstelle
- 10: Eingabe
- 11: Weitergabe
- 12: Übermittlung
- 13: Ausgangssignal

## Patentansprüche

1. Verfahren zum Betrieb eines Ticketingsystems (1), bei dem
- ein virtuelles Ticket (5) erzeugt wird,
- dem virtuellen Ticket (5) ein benutzerunabhängiger Zugriffscode (6) zugeordnet wird,
- das virtuelle Ticket (5) zusammen mit dem Zugriffscode (6) gespeichert wird,
- der Zugriffscode (6) auf einen separaten Datenspeicher (8) hinterlegt wird
und bei dem ein Zugriff auf das virtuelle Ticket (5) durch Eingabe des auf dem separaten Datenspeicher (8) hinterlegten Zugriffscode (6) an einer dafür vorgesehenen Eingabestelle (9) des Ticketingsystems (1) erfolgt.

2. Verfahren nach Anspruch 1, **dadurch gekennzeichnet, dass** dem virtuellen Ticket (5) bei dessen Erzeugung der Zugriffscode (6) zugeordnet wird.

3. Verfahren nach Anspruch 1 oder 2, **dadurch gekennzeichnet, dass** das virtuelle Ticket (5) zusammen mit dem Zugriffscode (6) zentral gespeichert wird.

4. Verfahren nach Anspruch 1, 2 oder 3, **dadurch gekennzeichnet, dass** das virtuelle Ticket (5) bei seiner ersten Verwendung aktiviert wird.

5. Verfahren nach einem der vorhergehenden Ansprüche, **dadurch gekennzeichnet, dass** als separater Datenspeicher (8) ein bereits im Besitz des Benutzers befindlicher Datenspeicher verwendet wird.

6. Verfahren nach einem der vorhergehenden Ansprüche, **dadurch gekennzeichnet, dass** als separater Datenspeicher (6) ein wiederverwendbarer Datenspeicher gewählt wird.

7. Verfahren nach einem der vorhergehenden Ansprüche 1 bis 6, **dadurch gekennzeichnet, dass** der Zugriffscode (6) vom Benutzer (2) bereitgestellt wird.
